# EUROPEAN PATENT SPECIFICATION

(11) **EP 2 231 376 B1**
(45) Date of publication and mention of the grant of the patent: **05.08.2015**
(21) Application number: 08870276.6
(22) Date of filing: 31.12.2008
(51) Int. Cl.: B29C 43/02, B29C 43/32, B29C 43/36, B21D 11/10, B21D 22/18

(54) **TOOL AND METHOD FOR FORMING CONSTRUCT**
WERKZEUG UND VERFAHREN ZUM FORMEN VON KONSTRUKTEN
OUTIL ET PROCÉDÉ POUR FORMER UNE CONSTRUCTION

(30) Priority: 31.12.2007 US 17850 P
(43) Date of publication of application: 29.09.2010
(73) Proprietor: Graphic Packaging International, Inc., Marietta, GA 30067 (US)
(72) Inventor: O'HAGAN, Brian, R., Appleton WI 54915 (US); MIDDLETON, Scott, W., Oshkosh WI 54904 (US); BLAAS, Peter, W., Marion WI 54950 (US); HJORT, Kevin, J., Clintonville WI 54929 (US)
(74) Representative: Grättinger Möhring von Poschinger Patentanwälte Partnerschaft
(86) International application number: PCT/US2008/088605
(87) International publication number: WO 2009/088904

(56) References cited:
- WO-A2-2007/106367
- GB-A- 2 229 133
- JP-A- 2007 111 888
- KR-B1- 100 360 299
- KR-U- 19990 023 720

## Description

### Background of the Disclosure

The present disclosure generally relates to constructs and, more particularly, the present disclosure relates to tools and methods for forming three-dimensional containers from blanks.

There belong to the prior art tools for forming three-dimensional containers from blanks, said tools having a cavity and a core (see e.g. WO 2007/106367 A2; Fig. 8A). The cavity has a spring loaded articulation portion moveably connected to a cavity base. The core has a spring loaded nose moveably connected to a nose base. The side walls of the three-dimensional container are formed by the combination of external surfaces of the core base and of the core nose, there being a gap between both said extended surfaces.

GB 2229133 A deals with forming of a compound piece comprising a rigid deformable support and a flexible decorative covering. The respective mould comprises two half-moulds, each comprising a spring loaded movable portion. This reference teaches to first form and hold in place, by interaction of the two opposed movable portions, both components in a selected area and subsequently forming both components in the remainder of the piece by the co-operating remainders of the two half-moulds.

The present invention aims at providing the prior art container forming tool and container forming method in terms of quality of the formed three-dimensional container.

### Summary of the Disclosure

The object set out above is achieved by the container forming tool defined in claim 1 and by the container forming method defined in claim 11, respectively. Accordingly, both the tool and the method of the present invention are coined by a specific relation of the strength of the cavity articulating portion springs and the core nose springs such that, when the container is formed from the blank, the nose is moved relative to the nose base prior to fully receiving the core into the cavity to complete formation of the blank into the container.

With other words, the disclosure is generally directed to a tool for forming a construct from a blank. The tool comprises a cavity operable to receive a blank. The cavity comprises an articulating portion and a cavity base. The articulating portion is moveably connected to the cavity base. The cavity comprises at least one cavity spring for controlling movement of the articulating portion relative to the cavity base. A core is operatively connected to the cavity. The core is operable to enter the cavity to at least partially form the blank into a construct. The core comprises a core base and a nose that is moveably connected to the core base. The core comprises at least one core spring for controlling movement of the nose relative to the core base. The at least one cavity spring has a first strength, and the at least one core spring has a second strength. The first strength is greater than the second strength.

In another aspect, the disclosure is generally directed to a method of forming a construct from a blank. The method comprises providing a blank and placing the blank in a forming tool. The forming tool comprises a cavity and a core. The cavity has an articulating portion, a cavity base, and at least one cavity spring for controlling movement of the articulating portion relative to the cavity base. The core comprises a core base, a nose, and at least one core spring for controlling movement of the nose relative to the core base. The method further comprising closing the tool while the blank is in the tool so that the core is at least partially received in the cavity. The closing the tool comprises pressing the core against the blank to compress the at least one core spring and further moving the core to cause the articulating portion to move relative to the cavity base. The at least one core spring is compressed prior to fully receiving the core into the cavity to complete formation of the blank into the construct.

Those skilled in the art will appreciate the above-stated advantages and other advantages and benefits of various additional embodiments reading the following detailed description of the embodiments with reference to the below-listed drawing figures.

According to common practice, the various features of the drawings discussed below are not necessarily drawn to scale. Dimensions of various features and elements in the drawings may be expanded or reduced to more clearly illustrate the embodiments of the disclosure

### Brief Description of the Drawings

Fig. 1 is a schematic diagram of a forming tool of one embodiment of the present disclosure.
Fig. 2 is a schematic diagram of the forming tool of Fig. 1 with the tool positioned to form a construct from a blank.
Fig. 3 is a schematic diagram of the forming tool of Fig. 2 further positioned to further form the construct.
Fig. 4 is a schematic diagram of the forming tool of Fig. 3 further positioned to further form the construct.
Fig. 5 is an enlarged portion of Fig. 4.
Fig. 6 is a top view of the construct formed from the forming tool.

Corresponding parts are designated by corresponding reference numbers throughout the drawings.

### Detailed Description of the Exemplary Embodiment

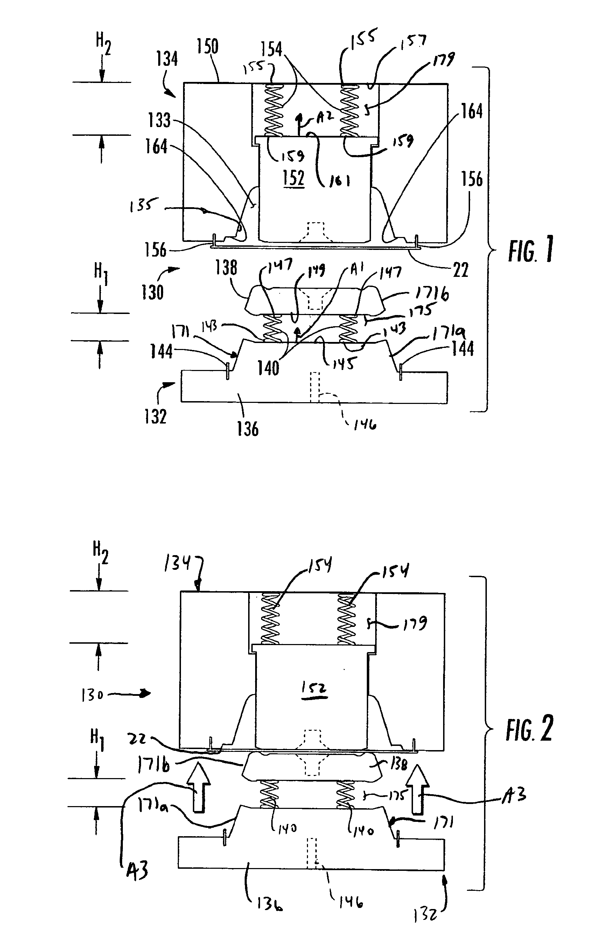

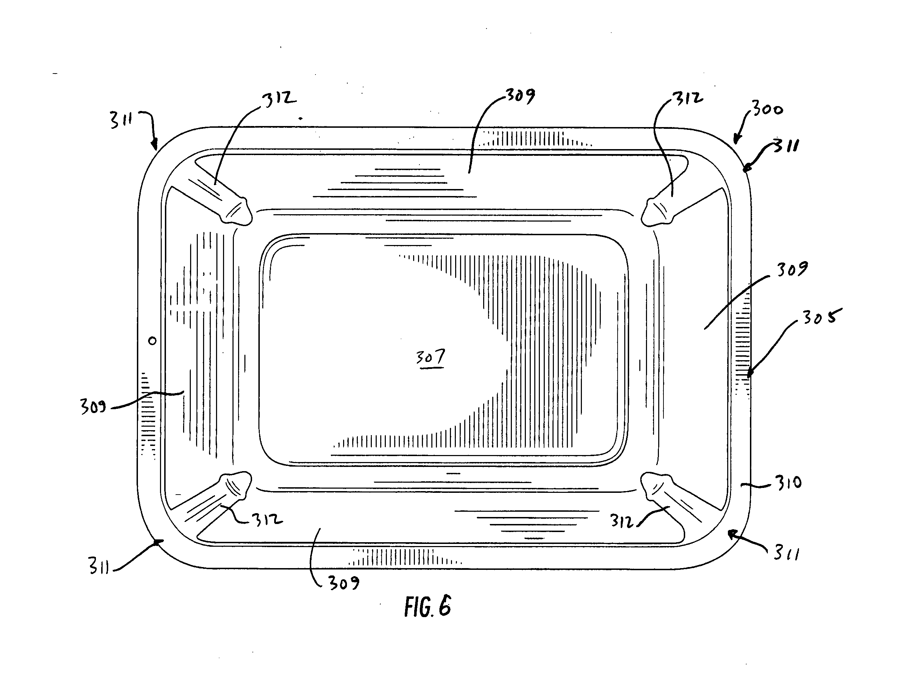

Fig. 1 schematically illustrates a tool (e.g., mold assembly 130) that can be used in the manufacture of or forming of a container or construct 300 (Fig. 6), in accordance with one embodiment. The container 300 can have an injection-molded structure 305 with similar characteristics as the container and injection-molded structure described in co-assigned U.S. Patent Application No. 11/715,718 filed March 8, 2007 ("the '718 application"). Further, the container and injection-molded structure may be formed by similar methods, tools, apparatus, etc. as disclosed in the '718 application. Alternatively, the mold assembly 130 of the present disclosure may be used to form containers that do not have injection molded features without departing from the disclosure.

In the illustrated embodiment, the container 300 has a bottom wall 307, and four side walls 309 extending upwardly from the bottom wall. The injection-molded structure 305 can include a flange 310 that extends around the perimeter of the container and fingers 312 that extend downward from the flange 310 at respective corners 311 of the container. The container 300 and injection-molded structure 305 can be otherwise shaped, arranged, configured, and/or omitted without departing from the disclosure.

The mold assembly 130 is in an open configuration in Fig. 1, and it includes a male mold 132 (e.g., core) and a female mold 134 (e.g., cavity). The female mold 134 includes a space 133 that is defined by a sidewall 135 that is generally shaped to correspond with the shape of the construct 300. In the illustrated embodiment, the male mold 132 is shaped to generally correspond to the shape of the space 133 to form the three-dimensionally-shaped construct 300 from a generally flat blank 22 that is pressed into the space. The male mold 132 and/or the female mold 134 may be otherwise shaped and/or arranged without departing from the disclosure.

As shown in Fig. 1, core 132 includes an outer mold or core base 136 to which a nose unit 138 (e.g., core plate or nose) is mounted. The nose 138 is moveably mounted to the core base 136 and is connected to the core base by a group of core springs 140, two of which are shown in Fig. 1. In alternative embodiments, a single core spring 140 could be provided. Optionally, four securing elements, such as securing pins 144, protrude from the core base 136 for aiding in the forming of the container. There can be a greater or lesser number of securing elements (e.g., securing pins 144), and in some situations they can be completely omitted without departing from the disclosure.

In one embodiment, a port 146 (e.g., with a valve gate) is optionally defined in the core base 136, or otherwise provided, for injecting fluid injection-molding material (e.g., resin) or the like, into the mold assembly 130 to form the injection-molded structure 305 of the construct 300. In one example, the port 146 is in the form of, or includes, a valve gate. The port 146 can be omitted such that the tool 130 forms the construct that is free from an injection-molded structure without departing from the disclosure.

In the illustrate embodiment, the cavity 134 includes a cavity base 150 to which an embossing unit 152 (e.g., cavity plate or articulating portion) is movably mounted. In one embodiment, a group of cavity springs 154, only two of which are schematically shown in Fig. 1, urge the articulating portion 152 toward the core 132. Alternatively, a single cavity spring 154 can be provided or the springs can be omitted without departing from the disclosure. A group of locating pins 156 can be mounted to the cavity base 150 in an arrangement that is for helping to position the blank 22 in a predetermined location. The cavity 134 includes a flange surface 164 that is generally perpendicular to the sidewall 135 and further at least partially defines the space 133.

In one embodiment of the disclosure, the core springs 140 in the male mold 132 and the cavity springs 154 in the female mold 134 are of different strength to prevent pinching the sidewalls 309 of the blank 22 when forming the construct. In the illustrated embodiment, the cavity springs 154 in the female mold 134 are stronger than the core springs 140 of the male mold 132 so that the cavity springs have a higher resistance to compression. The higher strength of the cavity springs 154 allows the core springs 140 to compress when the nose 138 presses the blank 22 against the articulating portion 152, prior to movement of the articulating portion 152 and corresponding compression of the cavity springs 154.

As shown in Fig. 1, the core springs 140 have a first end 143 in contact with a surface 145 of the core base 136. The core springs 140 have a second end 147 in contact with a surface 149 of the nose 138. The cavity springs 154 have a first end 155 in contact with a surface 157 of the cavity base 150. The cavity springs 154 have a second end 159 in contact with a surface 161 of the articulating portion 152. The core springs 140 and/or the cavity springs 154 could be otherwise shaped, arranged, and/or configured without departing from the disclosure.

In one embodiment, the core springs 140 can have a diameter of at least approximately 0.75 inches (19 mm), and an overall, non-compressed length of at least approximately 1.25 inches (30 mm). In the illustrated embodiment, the cavity springs 154 can have a diameter of at least approximately 0.75 inches (20 mm), and an overall, non-compressed length of at least approximately 7.0 inches (175 mm). In one embodiment, the core springs 140 and the cavity springs 154 can be a medium heavy duty die spring of the type commercially available from Associated Spring Raymond of Maumee, OH. Alternatively, the core springs 140 and/or the cavity springs 154 could be otherwise shaped, arranged, and/or configured to be other types and/or sizes of springs. All dimensional information presented herein is intended to be exemplary and is not intended to limit the scope of the disclosure.

In the illustrated embodiment, the cavity springs 154 have a first strength, or resistance to linear compression, and the core springs 140 have a second strength, or resistance to linear compression. The cavity springs 154 provide a resistance to the movement of the articulating portion 152 relative to the cavity base 150. The core springs 140 provide a resistance to the movement of the nose 138 relative to the core base 136. In the illustrated embodiment, the first strength of the cavity springs 154 is greater than the second strength of the cores springs 140 so that when the core 132 and cavity 134 are brought together, in contact with the blank 22 located therebetween, the core springs are compressed prior to the compression of the cavity springs. Accordingly, the surface 145 of the base 136 is moved closer to the surface 149 of the nose 138 when the base 136 is moved in the direction of arrow A1 (Fig. 1) relative to the nose. The moving of the surface 145 occurs prior to the movement of the articulating portion 152 moving in the direction of arrow A2 (Fig. 1) resulting in the compression of the cavity springs 155. Alternatively, the resistance to movement of the articulating portion 152 could be maintained to be greater than the resistance to movement of the nose 138 by mechanisms other than the cavity springs 154. For example, the cavity springs 154 and/or the core springs 140 could be mechanisms other than coil springs (e.g., gas springs, reciprocating pistons, or other mechanism that provides resistance to linear compression).

In the illustrated embodiment, the core 136 has an external surface 171 for cooperating with the surface 135 of the cavity 134 to form the sidewalls 309 of the container 300. In one embodiment, the external surface 171 of the core 136 includes a first portion 171a on the base 136 and a second portion 171b on the nose 138. The first portion 171 a and the second portion 171b are spaced apart by a gap 175. As shown in Fig. 1 and 2, the nose 138 is in an extended position such that the gap 175 has a maximum dimension H1. As shown in Fig. 1, the articulating portion 152 of the cavity 134 is shown in an extended position wherein the articulating portion is spaced apart from the surface 157 of the cavity base 150 by a gap 179 having a maximum dimension H2. As will be discussed below in more detail, as the forming tool 130 is operated to form the container 300 from the blank 22, the gap 175 is first reduced by the movement of the nose 138 in the direction of arrow A1 and then the gap 179 is reduced by the movement of the articulating portion 152 in the direction of arrow A2.

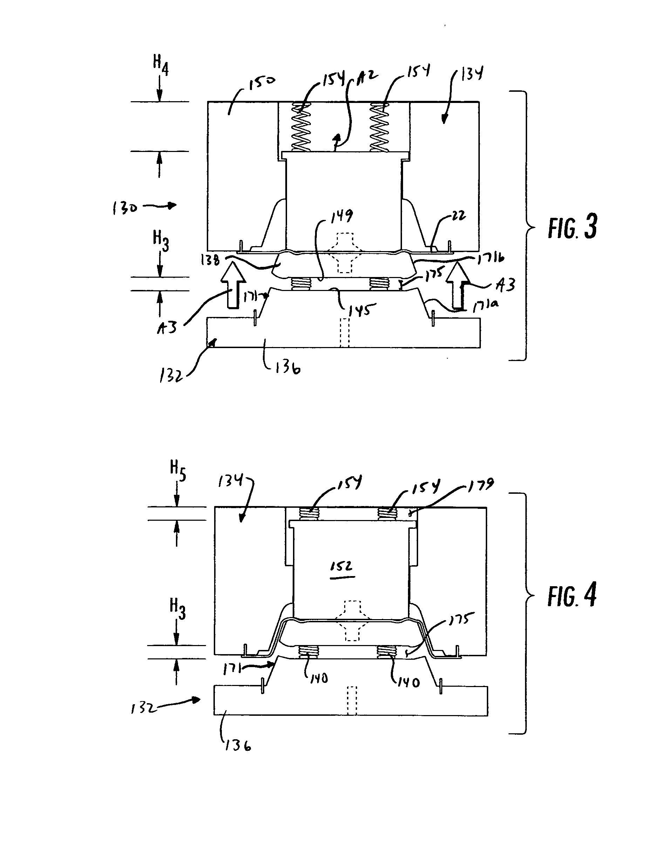

A method of forming the construct 300 (Fig. 6) from the forming tool 130 will now be described. The blank 22 is first placed between the cavity 134 and the core 132 as generally shown schematically in Fig. 1. As shown in Fig. 2, the core 132 is moved in the direction of arrows A3 so that the nose 138 contacts the blank 22 that is held between the core and the cavity 134 and presses the blank against the articulating portion 152. Alternatively, the cavity 134 could be moved in a direction opposite to the arrows A3 so that the articulating portion 152 presses the blank 22 against the nose 138. As shown in Fig. 3, the core 132 is further moved in the direction of arrows A3 so that the gap 175 between the nose 138 and the base 136 is reduced to a minimum dimension H3. The gap 175 is reduced when the core springs 140 are compressed by the upward movement of the base 136 relative to the nose 138. At this point in the article forming process, the articulating portion 152 of the cavity 134 does not move because the force applied to the core 136 to move it toward the cavity is insufficient to overcome the resistance to compression of the cavity springs 154. As shown in Fig. 4, when sufficient force is applied to the core 136 to overcome the resistance to compression of the cavity springs 154, the articulating section 152 moves in the direction of arrow A2 to reduce the height of the gap 179 to a minimum distance of H5. Alternatively, the cavity springs 154 could be partially compressed (e.g., so that the height of the gap 179 has a dimension less than H3 and greater than H2).

In the illustrated embodiment, the blank 22 is formed into the container 200 by the configuration of the forming tool 130 shown in Fig. 4 with the external surface 171 of the core 132 pressing the portions of the blank corresponding with the sidewalls 309 of the container against the surface 135 of the cavity 134. The core springs 140 are compressed prior to fully receiving the core 132 into the cavity 134 to complete the formation or shaping of the blank 22 into the construct 300. The compression of the core springs 140 minimizes the height of the gap 179 prior to completion of the forming or shaping of the blank 22 into the shape of the construct 300.

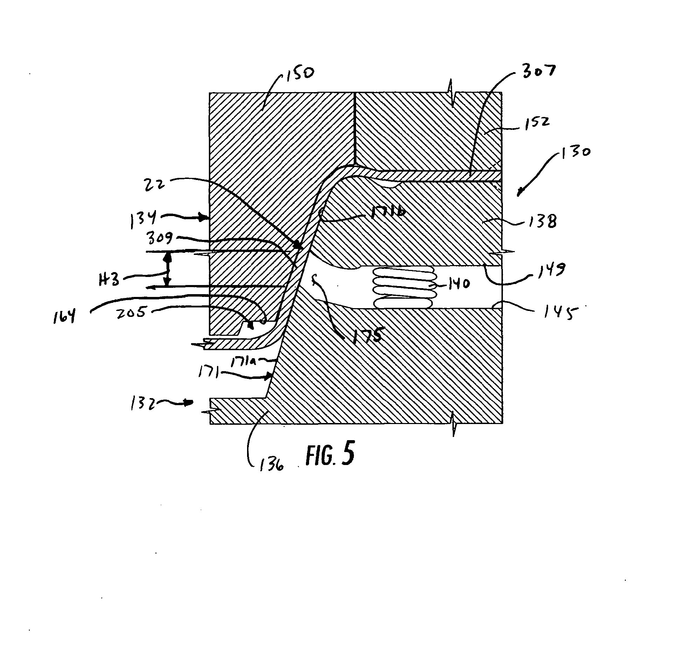

The injection-molded structure 305 can be formed by injecting injection-molding material (e.g., polymeric material, resin, etc.) through the port 146 that fills an injection cavity 205 (Fig. 5) formed between the flange surface 164 of the cavity 134 and the blank 22. In the illustrated embodiment, the injection cavity 205 is shaped to form the injection-molded structure 305 that can include the flange 310 and fingers 312 but the injection cavity can be otherwise shaped, arranged, configured, and/or omitted without departing from the disclosure. In one embodiment, the injection molding occurs after completion of the formation or shaping of the blank 22 by fully receiving the core 132 into the cavity 134 so that the blank is pressed against the external surface 171 of the core and the surface 135 of the cavity.

In accordance with the exemplary embodiments of the present disclosure, the blanks can be formed from paperboard, corrugated cardboard or other materials having properties suitable for at least generally enabling respective functionalities described above. Paperboard is typically of a caliper such that it is heavier and more rigid than ordinary paper, and corrugated cardboard is typically of a caliper such that it is heavier and more rigid than paperboard. Typically, at least the side of the paperboard or cardboard that will be an exterior surface in the carton erected therefrom will be coated with a clay coating, or the like. The clay coating can be printed over with product, advertising, price-coding, and other information or images. The blanks may then be coated with a varnish to protect any information printed on the blanks. The blanks may also be coated with, for example, a moisture barrier layer, on one or both sides. The blanks can also be laminated to or coated with one or more sheet-like materials.

The foregoing description of the disclosure illustrates and describes various embodiments of the present disclosure. As various changes could be made in the above construction without departing from the scope of the claims, it is intended that all matter contained in the above description or shown in the accompanying drawings shall be interpreted as illustrative and not in a limiting sense. Furthermore, the scope of the present claims covers various modifications, combinations, and alterations, etc., of the above-described embodiments. Additionally, the disclosure shows and describes only selected embodiments of the disclosure, but the disclosure is capable of use in various other combinations, modifications, and environments and is capable of changes or modifications within the scope of the inventive concept as expressed herein, commensurate with the above teachings, and/or within the skill or knowledge of the relevant art. Furthermore, certain features and characteristics of each embodiment may be selectively interchanged and applied to other illustrated and non-illustrated embodiments of the disclosure without departing from the scope of the claims.

## Claims

1. A tool (130) for forming a construct (300) from a blank (22), the tool comprising:
a cavity (134) operable to receive a blank, the cavity comprising an articulating portion (152) and a cavity base (150), the cavity (134) comprises at least one sidewall (135) for forming at least one sidewall (309) of the construct (300), the construct being a three-dimensional container formed from the blank (22), the articulating portion being moveably connected to the cavity base, the cavity comprising at least one cavity spring (154) for controlling movement of the articulating portion relative to the cavity base;
a core (132) operatively connected to the cavity, the core being operable to enter the cavity to at least partially form the blank into a construct, the core comprising a core base (136) and a nose (138) being moveably connected to the core base, the core (132) has a surface (171) for cooperating with the at least one sidewall (135) to at least partially form the blank (22) into the construct (300), the surface comprising a portion of an external surface (171a) of the core base (136) and a portion of an external surface (171b) of the nose (138), the external surface of the core base and the external surface of the nose being spaced apart to at least partially form a gap (175), the core comprising at least one core spring (140) for controlling movement of the nose relative to the core base, **characterized in that**
the at least one cavity spring has a first strength, and the at least one core spring has a second strength, the first strength being greater than the second strength.

2. The tool (130) of claim 1 wherein the cavity spring (154) has a first end (155) that is in contact with a surface (157) of the cavity base (150) and a second end (159) that is in contact with a surface (161) of the articulated portion (152), the core spring (140) has a first end (143) that is in contact with a surface (145) of the core base (136) and a second end (147) that is in contact with a surface (149) of the nose (138).

3. The tool (130) of claim 1 wherein the tool comprises an injection cavity (205) at least partially formed from the cavity (134) and the core (132), the injection cavity being for receiving liquid resin around at least a portion of the perimeter of the blank (22).

4. The tool (130) of claim 3 wherein the injection cavity (205) is for forming an injection-molded band on a flange of the construct.

5. The tool (130) of claim 4 wherein the injection cavity (205) is for forming an injection-molded strip that extends from the injection-molded band and at least partially defines a corner (311) of the construct (300).

6. The tool (130) of claim 2 wherein the at least one cavity spring (154) has a first length between respective ends (155, 159) of the cavity spring, and the at least one core spring (140) has a second length between respective ends (143, 147) of the core spring, the first length being greater than the second length.

7. The tool (130) of claim 6 wherein the first length is at least approximately 175 millimeters inches and the second length is at least approximately 30 millimeters.

8. The tool (130) of claim 7 wherein the at least one cavity spring (154) has a first diameter and the at least one core spring (140) has a second diameter, the first diameter and the second diameter are substantially equal.

9. The tool (130) of claim 1 wherein the gap (175) being defined by a first distance (H1) between the core base (136) and the nose (138) prior to the formation of the blank (22) into the construct (300), and the gap being defined by a second distance (H3) between the core base and the nose after the core has been pressed against the blank to compress the at least one core spring (140).

10. The tool (130) of claim 9 wherein the gap (175) is maintained at the second distance (H3) while the core (132) is further moved into the cavity (134) to form the blank (22) into the construct (300).

11. A method of forming a construct (300) from a blank (22), the method comprising:
providing a blank;
placing the blank in a forming tool (130), the forming tool comprising a cavity (134) having a articulating portion (152), a cavity base (150), and at least one cavity spring (154) for controlling movement of the articulating portion relative to the cavity base, and a core (132) comprising a core base (136), a nose (138), and at least one core spring (140) for controlling movement of the nose relative to the core base;
closing the tool while the blank is in the tool,
the closing the tool comprising pressing the core against the blank to compress the at least one core spring and further moving the core to cause the articulating portion to move relative to the cavity base, the at least one core spring being compressed prior to receiving the core into the cavity to complete formation of the blank into the construct;
wherein the core (132) has a surface (171) comprising a portion of an external surface (171a) of the core base (136) and a portion of an external surface (171b) of the nose (138), the external surface of the core base and the external surface of the nose being spaced apart to at least partially define a gap (175), wherein the gap between the external surface of the nose and the external surface of the core base is reduced by the compression of the at least one core spring (140) and the movement of the nose relative to the core base.

12. The method of claim 11 wherein the at least one core spring (140) is compressed prior to movement of the articulating portion (152) relative to the cavity base (150).

13. The method of claim 11 wherein the closing the tool (130) comprises pressing the blank (22) against a surface (135) of the cavity (134) to at least partially form the construct (300).

14. The method of claim 13 wherein the pressing the blank (22) against the surface (135) of the cavity (134) comprises completing formation of the blank into the construct (300), the completing the formation of the blank into the construct comprises fully compressing the at least one cavity spring (154).

15. The method of claim 11 wherein the tool (130) further comprises an injection cavity (205) at least partially formed from the cavity (134) and the core (132), the method further comprising forming flange of the construct and injection molding a feature onto the flange.

16. The method of claim 11 wherein the gap (175) is reduced prior to the core (132) being received in the cavity (134).

17. The method of claim 11 wherein the surface (171) of the core (132) presses the blank (22) against a surface (135) of the cavity (134) to at least partially form the blank into the construct (300).

18. The method of claim 11 wherein the movement of the core (132) comprises at least partially forming the blank (22) into the construct (300), wherein the movement of the core causes the articulating portion (152) of the cavity (134) to move relative to the cavity base (150).

19. The method of claim 18 wherein the at least one cavity spring (154) is compressed after the at least one core spring (140) is compressed.

20. The method of claim 11 wherein the cavity spring (154) has a first strength and the core spring (140) has a second strength, the first strength being greater than the second strength.

## Patentansprüche

1. Werkzeug (130) zum Formen eines Gebildes (300) aus einem Rohling (22), wobei das Werkzeug umfasst:
eine Kavität (134), die einsatzfähig ist, um einen Rohling aufzunehmen, wobei die Kavität einen gelenkigen Abschnitt (152) und eine Kavitätsbasis (150) umfasst, wobei die Kavität (134) mindestens eine Seitenwand (135) zum Formen mindestens einer Seitenwand (309) des Gebildes (300) umfasst, wobei das Gebilde ein dreidimensionaler Behälter ist, der aus dem Rohling (22) geformt wird, wobei der gelenkige Abschnitt beweglich mit der Kavitätsbasis verbunden ist, wobei die Kavität mindestens eine Kavitätsfeder (154) zum Steuern der Bewegung des gelenkigen Abschnitts relativ zu der Kavitätsbasis umfasst;
einen Kern (132), der mit der Kavität wirkverbunden ist, wobei der Kern einsatzfähig ist, um in die Kavität eingeführt zu werden, um den Rohling mindestens teilweise zu einem Gebilde zu formen, wobei der Kern eine Kernbasis (136) und eine Nase (138), die beweglich mit der Kernbasis verbunden ist, umfasst, wobei der Kern (132) eine Oberfläche (171) zum Zusammenwirken mit der mindestens einen Seitenwand (135) aufweist, um den Rohling (22) mindestens teilweise zu dem Gebilde (300) zu formen, wobei die Oberfläche einen Abschnitt einer äußeren Oberfläche (171a) der Kernbasis (136) und einen Abschnitt einer äußeren Oberfläche (171b) der Nase (138) umfasst, wobei die äußere Oberfläche der Kernbasis und die äußere Oberfläche der Nase voneinander beabstandet sind, um mindestens teilsweise einen Zwischenraum (175) zu bilden, wobei der Kern mindestens eine Kernfeder (140) zum Steuern von Bewegung der Nase relativ zu der Kernbasis umfasst, **dadurch gekennzeichnet, dass**
die mindestens eine Kavitätsfeder eine erste Stärke aufweist und die mindestens eine Kernfeder eine zweite Stärke aufweist, wobei die erste Stärke größer als die zweite Stärke ist.

2. Werkzeug (130) nach Anspruch 1, wobei die Kavitätsfeder (154) ein erstes Ende (155), das mit einer Oberfläche (157) der Kavitätsbasis (150) in Kontakt steht, und ein zweites Ende (159), das mit einer Oberfläche (161) des gelenkigen Abschnitts (152) in Kontakt steht, aufweist, wobei die Kernfeder (140) ein erstes Ende (143), das mit einer Oberfläche (145) der Kernbasis (136) in Kontakt steht, und ein zweites Ende (147), das mit einer Oberfläche (149) der Nase (138) in Kontakt steht, aufweist.

3. Werkzeug (130) nach Anspruch 1, wobei das Werkzeug eine Spritzkavität (205) umfasst, die mindestens teilweise aus der Kavität (134) und dem Kern (132) gebildet ist, wobei die Spritzkavität zum Aufnehmen von flüssigem Harz um mindestens einen Abschnitt des Umfangs des Rohlings (22) dient.

4. Werkzeug (130) nach Anspruch 3, wobei die Spritzkavität (205) zum Formen eines spritzgegossenen Bandes an einem Flansch des Gebildes bestimmt ist.

5. Werkzeug (130) nach Anspruch 4, wobei die Spritzkavität (205) zum Formen eines spritzgegossenen Streifens bestimmt ist, der sich von dem spritzgegossenen Band erstreckt und mindestens teilweise eine Ecke (311) des Gebildes (300) definiert.

6. Werkzeug (130) nach Anspruch 2, wobei die mindestens eine Kavitätsfeder (154) eine erste Länge zwischen jeweiligen Enden (155, 159) der Kavitätsfeder aufweist und die mindestens eine Kernfeder (140) eine zweite Länge zwischen jeweiligen Enden (143, 147) der Kernfeder aufweist, wobei die erste Länge größer als die zweite Länge ist.

7. Werkzeug (130) nach Anspruch 6, wobei die erste Länge mindestens etwa 175 Millimeter und die zweite Länge mindestens etwa 30 Millimeter beträgt.

8. Werkzeug (130) nach Anspruch 7, wobei die mindestens eine Kavitätsfeder (154) einen ersten Durchmesser und die mindestens eine Kernfeder (140) einen zweiten Durchmesser aufweist, wobei der erste Durchmesser und der zweite Durchmesser im Wesentlichen gleich sind.

9. Werkzeug (130) nach Anspruch 1, wobei der Zwischenraum (175) vor dem Formen des Rohlings (22) zu dem Gebilde (300) durch einen ersten Abstand (H1) zwischen der Kernbasis (136) und der Nase (138) definiert ist und der Zwischenraum nachdem der Kern gegen den Rohling gedrückt wurde, um die mindestens eine Kernfeder (140) zusammenzudrücken, durch einen zweiten Abstand (H3) zwischen der Kernbasis und der Nase definiert ist.

10. Werkzeug (130) nach Anspruch 9, wobei, während der Kern (132) weiter in die Kavität (134) bewegt wird, um den Rohling (22) zu dem Gebilde (300) zu formen, der Zwischenraum (175) in dem zweiten Abstand (H3) gehalten wird.

11. Verfahren zum Formen eines Gebildes (300) aus einem Rohling (22), wobei das Verfahren umfasst:
Bereitstellen eines Rohlings;
Anordnen des Rohlings in einem Formwerkzeug (130), wobei das Formwerkzeug umfasst: eine Kavität (134) mit einem gelenkigen Abschnitt (152), einer Kavitätsbasis (150) und mindestens einer Kavitätsfeder (154) zum Steuern der Bewegung des gelenkigen Abschnitts relativ zu der Kavitätsbasis und einen Kern (132), der eine Kernbasis (136), eine Nase (138) und mindestens eine Kernfeder (140) zum Steuern der Bewegung der Nase relativ zu der Kernbasis umfasst;
Schließen des Werkzeugs, während sich der Rohling in dem Werkzeug befindet,
wobei das Schließen des Werkzeugs das Pressen des Kerns gegen den Rohling umfasst, um die mindestens eine Kernfeder zusammenzudrücken, und ferner das Bewegen des Kerns, um zu bewirken, dass sich der gelenkige Abschnitt relativ zu der Kavitätsbasis bewegt, wobei die mindestens eine Kernfeder vor dem Aufnehmen des Kerns in die Kavität, um das Formen des Rohlings zu dem Gebilde abzuschließen, zusammengedrückt wird;
wobei der Kern (132) eine Oberfläche (171) aufweist, die einen Abschnitt einer äußeren Oberfläche (171a) der Kernbasis (136) und einen Abschnitt einer äußeren Oberfläche (171b) der Nase (138) umfasst, wobei die äußere Oberfläche der Kernbasis und die äußere Oberfläche der Nase voneinander beabstandet sind, um mindestens teilweise einen Zwischenraum (175) zu definieren, wobei der Zwischenraum zwischen der äußeren Oberfläche der Nase und der äußeren Oberfläche der Kernbasis durch das Zusammendrücken der mindestens einen Kernfeder (140) und die Bewegung der Nase relativ zu der Kernbasis verkleinert wird.

12. Verfahren nach Anspruch 11, wobei die mindestens eine Kernfeder (140) vor der Bewegung des gelenkigen Abschnitts (152) relativ zu der Kavitätsbasis (150) zusammengedrückt wird.

13. Verfahren nach Anspruch 11, wobei das Schließen des Werkzeugs (130) das Pressen des Rohlings (22) gegen eine Oberfläche (135) der Kavität (134) umfasst, um das Gebilde (300) mindestens teilweise zu formen.

14. Verfahren nach Anspruch 13, wobei das Pressen des Rohlings (22) gegen die Oberfläche (135) der Kavität (134) das Fertigstellen des Formens des Rohlings zu dem Gebilde (300) umfasst, wobei das Fertigstellen des Formens des Rohlings zu dem Gebilde das vollständige Zusammendrücken der mindestens einen Kavitätsfeder (154) umfasst.

15. Verfahren nach Anspruch 11, wobei das Werkzeug (130) ferner eine Spritzkavität (205) umfasst, die mindestens teilweise aus der Kavität (134) und dem Kern (132) gebildet ist, wobei das Verfahren ferner das Formen eines Flansches des Gebildes und das Spritzgießen eines Merkmals auf den Flansch umfasst.

16. Verfahren nach Anspruch 11, wobei der Zwischenraum (175) verkleinert wird, ehe der Kern (132) in der Kavität (134) aufgenommen wird.

17. Verfahren nach Anspruch 11, wobei die Oberfläche (171) des Kerns (132) den Rohling (22) gegen eine Oberfläche (135) der Kavität (134) presst, um den Rohling mindestens teilweise zu dem Gebilde (300) zu formen.

18. Verfahren nach Anspruch 11, wobei die Bewegung des Kerns (132) das mindestens teilweise Formen des Rohlings (22) zu dem Gebilde (300) umfasst, wobei die Bewegung des Kerns bewirkt, dass sich der gelenkige Abschnitt (152) der Kavität (134) relativ zu der Kavitätsbasis (150) bewegt.

19. Verfahren nach Anspruch 18, wobei die mindestens eine Kavitätsfeder (154) zusammengedrückt wird, nachdem die mindestens eine Kernfeder (140) zusammengedrückt wird.

20. Verfahren nach Anspruch 11, wobei die Kavitätsfeder (154) eine erste Stärke und die Kernfeder (140) eine zweite Stärke aufweist, wobei die erste Stärke größer als die zweite Stärke ist.

## Revendications

1. Outil (130) permettant de former une structure (300) à partir d'une ébauche (22), cet outil comprenant :
une cavité (134) actionnable pour recevoir une ébauche, la cavité comprenant un segment d'articulation (152) et une base de cavité (150), la cavité (134) comprenant au moins une paroi latérale (135) pour former au moins une paroi latérale (309) de la structure (300), la structure étant un contenant tridimensionnel formé en partant de l'ébauche (22), le segment d'articulation étant connecté de manière mobile à la base de la cavité, la cavité comprenant au moins un ressort de cavité (154) pour contrôler le mouvement du segment d'articulation par rapport à la base de la cavité ;
un noyau (132) connecté opérationnellement à la cavité, le noyau étant actionnable pour rentrer dans la cavité afin de transformer au moins partiellement l'ébauche en une structure, le noyau comprenant une base de noyau (136) et un bec (138) qui est connecté de manière mobile à la base du noyau, le noyau (132) ayant une surface (171) destinée à coopérer avec l'au moins une paroi latérale (135) pour transformer au moins partiellement l'ébauche (22) en structure, la surface comprenant un segment d'une surface externe (171a) de la base du noyau (136) et un segment d'une surface externe (171b) du bec (138), la surface externe de la base du noyau et la surface externe du bec étant espacées afin de former au moins partiellement un intervalle (175), le noyau comprenant au moins un ressort de noyau (140) pour contrôler le mouvement du bec par rapport à la base du noyau,
**caractérisé en ce que**
l'au moins un ressort de cavité a une première résistance et l'au moins un ressort de noyau a une seconde longueur, la première résistance étant supérieure à la seconde résistance.

2. Outil (130) selon la revendication 1, dans lequel le ressort de cavité (154) a une première extrémité (155) qui est en contact avec une surface (157) de la base de la cavité (150) et une seconde extrémité (159) qui est en contact avec une surface (161) du segment articulé (152), le ressort de noyau (140) a une première extrémité (143) qui est en contact avec une surface (145) de la base de noyau (136) et une seconde extrémité (147) qui est en contact avec une surface (149) du bec (138).

3. Outil (130) selon la revendication 1, dans lequel l'outil comprend une cavité d'injection (205) formée au moins partiellement de la cavité (134) et du noyau (132), la cavité d'injection étant destinée à recevoir de la résine liquide autour d'au moins une partie du périmètre de l'ébauche (22).

4. Outil (130) selon la revendication 3, dans lequel la cavité d'injection (205) est destinée à former une bande moulée par injection sur une bride de la structure.

5. Outil (130) selon la revendication 4, dans lequel la cavité d'injection (205) est destinée à former un ruban moulé par injection qui s'étend depuis la bande moulée par injection et définit au moins partiellement un coin (311) de la structure (300).

6. Outil (130) selon la revendication 2, dans lequel l'au moins un ressort de cavité (154) a une première longueur entre des extrémités respectives (155, 159) du ressort de cavité et l'au moins un ressort de noyau (140) a une seconde longueur entre des extrémités respectives (143, 147) du ressort de noyau, la première longueur étant supérieure à la seconde longueur.

7. Outil (130) selon la revendication 6, dans lequel la première longueur est d'au moins approximativement 175 pouces millimètres et la seconde longueur est d'au moins approximativement 30 millimètres.

8. Outil (130) selon la revendication 7, dans lequel l'au moins un ressort de cavité (154) a un premier diamètre et l'au moins un ressort de noyau (140) a un second diamètre, le premier diamètre et le second diamètre étant sensiblement égaux.

9. Outil (130) selon la revendication 1, dans lequel l'intervalle (175) qui est défini par une première distance (H1) entre la base du noyau (136) et le bec (138) avant la transformation de l'ébauche (22) en structure (300) et l'intervalle qui est défini par une seconde distance (H3) entre la base du noyau le bec une fois que le noyau a été comprimé contre l'ébauche pour compresser l'au moins un ressort de noyau (140).

10. Outil (130) selon la revendication 9, dans lequel l'intervalle (175) est maintenu à la seconde distance (H3) alors que le noyau (132) continue à rentrer dans la cavité (134) pour transformer l'ébauche (22) en structure (300).

11. Procédé de formage d'une structure (300) en partant d'une ébauche (22), ce procédé comprenant :
le fait de se procurer une ébauche ;
le placement de l'ébauche dans un outil de formage (130), l'outil de formage comprenant une cavité (134) dotée d'un segment d'articulation (152), une base de cavité (150) et au moins un ressort de cavité (154) pour contrôler le mouvement du segment d'articulation par rapport à la base de la cavité, et un noyau (132) comprenant une base de noyau (136), un bec (138) et au moins un ressort de noyau (140) pour contrôler le mouvement du bec par rapport à la base de la cavité ;
la fermeture de l'outil alors que l'ébauche est dans l'outil,
la fermeture de l'outil comprenant la compression du noyau contre l'ébauche pour comprimer l'au moins un ressort de noyau et continuer à déplacer le noyau afin d'amener le segment d'articulation à bouger par rapport à la base de la cavité, l'au moins un ressort de noyau étant comprimé avant de recevoir le noyau dans la cavité afin de compléter la transformation de l'ébauche en structure ;
le noyau (132) ayant une surface (171) comprenant une partie d'une surface externe (171a) de la base de noyau (136) et une partie d'une surface externe (171b) du bec (138), la surface externe de la base du noyau et la surface externe du bec étant espacées afin de former au moins partiellement un intervalle (175), l'intervalle entre la surface externe du bec et la surface externe de la base du noyau étant réduit par la compression de l'au moins un ressort de noyau (140) comprenant au moins un ressort de noyau (140) et le mouvement du bec par rapport à la base du noyau.

12. Procédé selon la revendication 11, dans lequel l'au moins un ressort de noyau (140) est comprimé avant le mouvement du segment d'articulation (152) par rapport à la base de la cavité (150).

13. Procédé selon la revendication 11, dans lequel la fermeture de l'outil (130) comprend la compression de l'ébauche (22) contre une surface (135) de la cavité (134) pour former au moins partiellement la structure (300).

14. Procédé selon la revendication 13, dans lequel la compression de l'ébauche (22) contre la surface (135) de la cavité (134) comprend la réalisation de la transformation de l'ébauche en structure (300), la réalisation de la transformation de l'ébauche en structure comprenant la compression complète de l'au moins un ressort de cavité (154).

15. Procédé selon la revendication 11, dans lequel l'outil (130) comprend en outre une cavité d'injection (205) formée au moins partiellement de la cavité (134) et du noyau (132), ce procédé comprenant en outre le formage d'une bride de la structure et le moulage par injection d'un accessoire sur la bride.

16. Procédé selon la revendication 11, dans lequel l'intervalle (175) est réduit avant que le noyau (132) soit reçu dans la cavité (134).

17. Procédé selon la revendication 11, dans lequel la surface du noyau (132) presse l'ébauche (22) contre une surface (135) de la cavité (134) afin de transformer au moins partiellement l'ébauche en structure (300).

18. Procédé selon la revendication 11, dans lequel le mouvement du noyau (132) comprend la transformation au moins partielle de l'ébauche (22) en structure (300), le mouvement du noyau amenant le segment d'articulation (152) à bouger par rapport à la base de la cavité (150).

19. Procédé selon la revendication 18, dans lequel l'au moins un ressort de cavité (154) est comprimé une fois que l'au moins un ressort de noyau (140) est comprimé.

20. Procédé selon la revendication 11, dans lequel le ressort de cavité (154) a une première résistance et le ressort de noyau (140) a une seconde résistance, la première résistance étant supérieure à la seconde résistance.
